# EUROPEAN PATENT APPLICATION

(11) **EP 1 405 719 A1**
(43) Date of publication of application: **07.04.2004**
(21) Application number: 03256193.8
(22) Date of filing: 01.10.2003
(51) Int. Cl.: B32B 15/08, B32B 3/26

(54) **Scratch-resistant metal films and metallized surfaces and methods of fabricating them**

(30) Priority: 02.10.2002 US 263610
(71) Applicant: Lifescan, Inc., Milpitas, California 95035-6312 (US)
(72) Inventor: Shartle, Robert Justice, Livermore California 94550 (US)
(74) Representative: Mercer, Christopher Paul

(57) **Abstract**

Devices for conducting electrical signals and methods for fabricating the subject devices are provided by the present invention. The subject devices are layered structures which include at least one textured conductive film, layer or surface designed to resist the effects of scratching of the material and thereby maintain the conductivity of the material. More specifically, the subject devices include thin metal films or metallized surfaces having peaks and valleys formed therein such that a scratch within the film or surface does not extend completely through to the bottom surface of the valley, thereby maintaining a conductive pathway through the film or surface.

## Description

### TECHNICAL FIELD

The present invention is generally related to textured metal films and metallized surfaces.

### BACKGROUND OF THE INVENTION

Metallized surfaces or thin metal films or layers, such as those made by metal sputtering or thermal evaporation techniques, are commonly used in the fabrication of electronics, food packaging materials, window coverings, etc. Many of these metal surface layers or films are on the order of 100 Å and, thus, are extremely sensitive to scratches that can easily occur during normal processing and handling. To avoid scratches, the metal layer is typically covered with an additional layer of a polymer material which has a thickness on the order of 250,000 Å, making the metal layer orders of magnitude more scratch resistant. However, where the metal layer or film is used to conduct electrical signals, such as in semiconductors and other electrical components, *e.g*., electrochemical cells, it is not feasible to cover the metal with a polymer layer. As a result, conductive metal films are extremely susceptible to scratches. Even slight scratches, such as those caused by dust, can effectively eliminate a conductive pathway through the metal layer.

A particular application of thin metal films is in the field of electrochemical analyte concentration determination. Specifically, the metal films are used in the fabrication of electrodes which form an electrochemical cell, often in the form of a strip. Such electrochemical strips are used in the determination of analyte concentrations in physiological fluids such as blood, interstitial fluid, urine, etc. Common analytes include glucose, hemoglobin, cholesterol, etc.

The strip's metal layers are typically formed on a substrate material which is flat and planar without any surface texturing. As such, a scratch having the same order of magnitude, *e.g.*, 100 Å, as the thickness of the metal layer can affect the accuracy and precision of the analyte measurement or altogether eliminate a conductive pathway through the metal layer. This problem is exacerbated by web-based strip fabrication processes which involve much handling of the strips, *e.g.*, by web-advancing rollers, thereby increasing the likelihood of scratching the strip. Moreover, a defect in such a fabrication process, *e.g.,* a marred roller, is likely to cause repetitive scratching, thereby damaging batches of strips and resulting in substantial costs. Additionally, dust particles and the like can also cause random scratching of the metal films during the manufacturing process and thereafter.

As such, there is a need for a means of making thin metal layers or films more scratch-resistant, and thereby improving the manufacturability of such metal layers or films; improving the accuracy and precision of the devices, *e.g.*, electrochemical test strips, in which they are employed; and increasing the cost-effectiveness of web-based manufacturing processes.

### SUMMARY OF THE INVENTION

Devices having a layered structure for conducting electrical signals and methods for fabricating the subject structures are provided by the present invention. The subject devices are layered structures which include at least one textured conductive layer, film or surface designed to resist the effects of scratching of the device, thereby maintaining the conductivity of the conductive layer. More specifically, the subject devices include thin metal films or metallized surfaces having peaks and valleys formed therein such that a scratch within the film or surface does not extend completely through to the bottom surface of the valley, thereby maintaining a conductive pathway through the film or surface.

### BRIEF DESCRIPTION OF THE FIGURES

To facilitate understanding, the same reference numerals have been used (where practical) to designate similar elements that are common to the Figures. Some such numbering has, however, been omitted for the sake of drawing clarity.

Fig. 1 illustrates a magnified side view of a layered structure of the present invention.

Figs. 2A and 2B illustrate planar and cross-sectional views, respectively, of an embodiment of a metallized surface or metal film of the present invention having a geometric pattern.

Figs. 3A and 3B illustrate planar and cross-sectional views, respectively, of another embodiment of a metallized surface or metal film of the present invention also having a geometric pattern.

Figs. 4A and 4B illustrate plan views of other embodiments of metallized surfaces or metal films of the present invention having frosted patterns.

Fig. 5 illustrates an exemplary embodiment of an electrochemical test which may employ the metallized surfaces and metal films of the present invention.

### DETAILED DESCRIPTION OF THE PREFERRED EMBODIMENTS

Before the present invention is described in such detail, it is to be understood that this invention is not limited to particular variations set forth herein as various changes or modifications may be made to the invention described and equivalents may be substituted without departing from the true spirit and scope of the invention. In addition, many modifications may be made to adapt a particular situation, material, composition of matter, process, process act(s) or step(s) to the objective(s), spirit or scope of the present invention. All such modifications are intended to be within the scope of the claims made herein.

Methods recited herein may be carried out in any order of the recited events which is logically possible, as well as the recited order of events. Furthermore, where a range of values is provided, it is understood that every intervening value, between the upper and lower limit of that range and any other stated or intervening value in that stated range is encompassed within the invention. Also, it is contemplated that any optional feature of the inventive variations described may be set forth and claimed independently, or in combination with any one or more of the features described herein.

All existing subject matter mentioned herein (*e.g.*, publications, patents, patent applications and hardware) is incorporated by reference herein in its entirety except insofar as the subject matter may conflict with that of the present invention (in which case what is present herein shall prevail). The referenced items are provided solely for their disclosure prior to the filing date of the present application. Nothing herein is to be construed as an admission that the present invention is not entitled to antedate such material by virtue of prior invention.

Reference to a singular item, includes the possibility that there are plural of the same items present. More specifically, as used herein and in the appended claims, the singular forms "a," "an," "said" and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation. It is to be appreciated that unless defined otherwise, all technical and scientific terms used herein have the same meaning as commonly understood by one of ordinary skill in the art to which this invention belongs. Finally, it is to be noted that the terms "film," "layer" and "surface" may be used interchangeably herein.

In further describing the invention, the subject devices, *i.e.,* the layered structures including metallized surfaces or metal films or layers, are described first, followed by a description of the methods of fabricating the subject devices.

### Subiect Devices

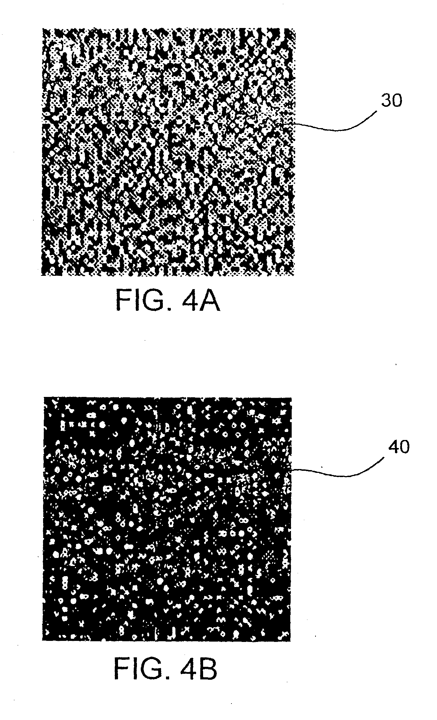

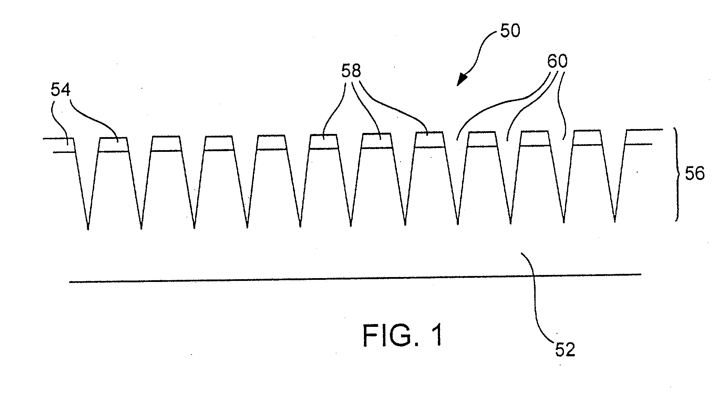

Referring now to the Figures, and to Fig. 1 in particular, there is illustrated a magnified side view of a schematic representation of an exemplary layered structure 50 of the present invention. Layered structure 50 includes a substrate layer 52 and a conductive film or layer 54. The top surface of layered structure 50 includes textured pattern 56. By textured, it is meant that such films, layers or surfaces have a contoured, three-dimensional configuration. The layered structures of the present invention may be described as having peaks 58 and valleys 60 formed by either micro-recesses therein or microstructures thereon or both. Such micro-recesses and microstructures may define a replicating or uniform geometric pattern or a random, non-geometric pattern, such as a frosting or the like. The recesses or structures may have an omni-directional or unidirectional configuration. Omni-directional patterns are particularly useful in resisting scratches occurring in random directions, while unidirectional patterns are particularly useful in resisting scratches in a single direction, *e.g.*, along the length of a web in a web-based manufacturing process.

The textured features have peak-to-valley distances greater than the thickness of the metal film, layer or surface 54 where such distances range from about 5 times the thickness of the thinnest metal film to about 250 times the thickness of the metal film As such, the textured features are orders of magnitude deeper at their deepest points than conventional metal films or layers, and thus, extend in to the substrate layer of the layered structure.

The peak-to-peak or valley-to-valley distance(s) may be any suitable distance for the application at hand but typically ranges from about 10,000 Å to about 1,000,000 Å, and more typically from about 50,000 Å to about 250,000 Å. The vertical peak-to-valley distance, *i.e.,* the depth of the recesses or the height of the micro-structures, typically ranges from about 500 Å to about 500,000 Å, and more typically from about 10,000 Å to about 25,000 Å and is no less than about 100 Å.

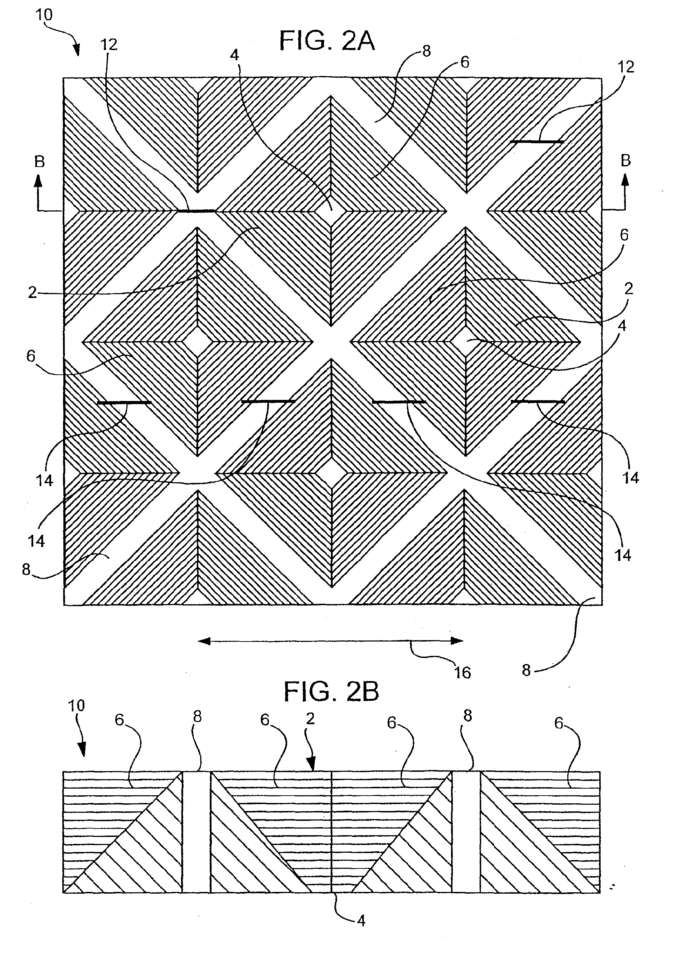

Referring now to Figs. 2, 3 and 4, there are illustrated exemplary embodiments of textured, conductive films or layers or metallized surfaces of the present invention. Metallized surface 10 of Figs. 2A and 2B has a textured pattern or a plurality of replicated or uniform geometric pockets or recesses 2 formed in a planar top surface 8 and having walls 6 which taper downward from top surface 8 to bottom planar land or surface 4. Recesses 2 are preferably, but not required to be, identical to each other, having the same dimensions and shape. For example, recesses 2 may have an upside down pyramid or frustum shape; however, any suitable shape may be employed including, but not limited to, upside down diamond-shaped, triangular, rectangular and conical, where the recesses 2 may define an oblique or right configuration.

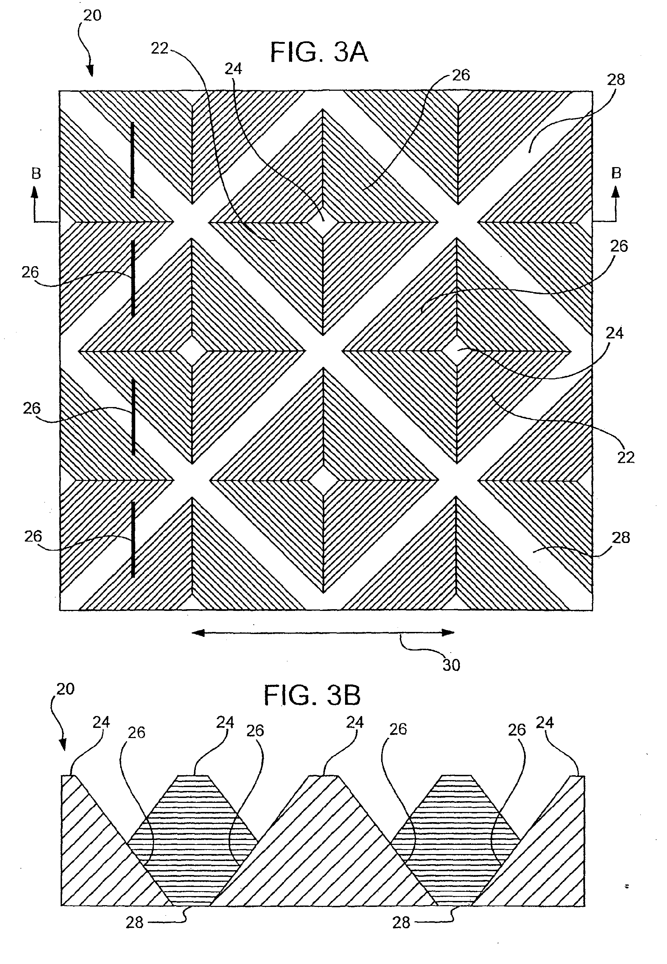

Figs. 3A and 3B illustrate another embodiment of a metallized surface or 20 having a textured pattern or plurality of replicated or uniform microstructures 22. Microstructures 22 are preferably, but not required to be, identical to each other, having the same dimensions and shape. For example, microstructures 22 may have a pyramid or frustum shape having four sides or walls 26 which extend from a planar floor or bottom surface 28 and taper upwards to a flat, planar land or top surface 24. However, any suitable shape may be employed including, but not limited to, diamond-shaped, triangular, rectangular and conical, where the microstructures may define an oblique or right configuration.

Fig. 2A shows "down-web" scratches 12 and 14 within the metallized film 10 which run substantially parallel to the direction of motion 16 of the webbing comprising the metal film 10. On the other hand, Fig. 3A shows "cross-web" scratches 26 which run substantially perpendicular to the direction of motion 30 of the webbing comprising metal film 20. Of course, scratches may occur at any angle with respect to the direction of motion of the metal film.

Scratches 12 are superficial scratches on top surface 8 of film 10, having a minimal depth relative to the depth of recesses 2, for example, less that about 100 Å. As such, these scratches will not interfere with the electrical continuity of film 10. Scratches 14 are relatively deeper than scratches 12 having a depth in the range from about 100 Å to about 20,000 Å and no more than about 25,000 Å. Cross-web scratches 26 are also relatively deep having a depth within the same range as down-web scratches 14. With the textured metal film of the present invention, even these deeper scratches 14, 26 will still not significantly increase the resistance of the metal film. Only scratches that extend to bottom surfaces 4 and 28 of metal films 10 and 20, respectively, may effectively interrupt the continuity of the conductive pathway through the metal film. However, such deep scratches are unlikely to occur when the fabrication process is done in a clean and controlled environment.

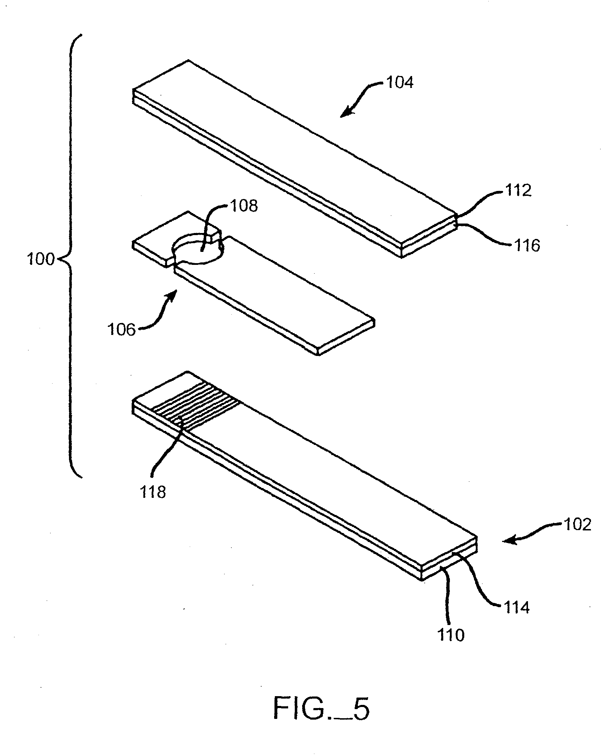

Figs. 4A and 4B illustrate textured metal film embodiments 30 and 40, respectively, having a frosted pattern or a frosting. The microstructures of Fig. 4A and those of Fig. 4B are randomly dispersed, *i.e.,* not evenly spaced, across the surface of the film and may have varying heights. The density of the microstructures may also vary across the surface are of the film. Film 40 of Fig. 4B, for example, has a denser frosting than that of film 3 0 of Fig. 4A, *i.e.*, film 40 has a greater number of microstructures which are closer to each other while film 30 has fewer microstructures which are farther apart from each other. The microstructures for these embodiments have peak-to-valley heights and peak-to-peak distances within the ranges stated above for the metal films having geometric patterns.

While the embodiments illustrated in the Figures illustrate replicating geometric patterns and random frosted patterns, these embodiments are intended to be exemplary and are no way intended to limit the present Invention.

### Fabrication of the Subject Devices

As mentioned above, the textured metallized surfaces or metal films of the present invention are highly suitable for use in fabricating conductive layers used in electronic and electrochemical devices, *e.g.*, an electrochemical test strip used for analyte measurement analysis. For purposes of illustration, fabrication of the textured metallized surfaces and metal films will be described in the context of fabrication of such an electrochemical test strip where the metal surfaces and films form a portion of the electrodes used to construct the electrochemical cell

The textured metal surfaces and films may be fabricated according to the present invention using any convenient techniques including, but not limited to, microreplication techniques including, microstamping, embossing, and casting processes. Because the films of the present invention and the test strips which they form are planar, the films are preferably fabricated from and processed on one or more webs, layers or sheets of suitable material. Such web-based manufacturing techniques provide significant cost advantage over more conventional methods in which the metal films, test strips and the like are produced one at a time.

While the following discussion of the subject fabrication methods is in the context of web-based manufacturing, the techniques discussed may also be used to make metal films having an area only suitable for a single test strip or the like. Additionally, while only certain fabrication techniques are emphasized, those skilled in the art will recognize that other known fabrication techniques may also be used which enable low cost manufacturing when desiring to form small structures having intricate features.

In fabricating the electrodes of an electrochemical test strip, an inert substrate material is provided which is sufficiently rigid to provide structural support for the electrodes. The conductive layer of the electrodes may then be sputtered onto a surface of the inert support material, thereby producing a metal film. Collectively, the substrate and metal film define a layered structure which may have one or more additional layers of material. Metal films suitable for use with the present invention are manufactured by Techni-Met, Inc., of Windsor, CT, and include, for example, palladium sputtered onto 125 microns of polyester with a resistance of less than 7 ohms per square and gold sputtered onto 125 microns of polyester with a resistance of less than 7 ohms per square.

A detailed description of a fabrication process for making electrochemical test strips is disclosed in EP-A-1 318 399,
wherein the textured metallized surfaces and metal films of the present invention may be used in lieu of the metal surfaces or films disclosed in this reference. With reference to Fig. 5, a brief description of such an exemplary electrochemical test strip 100 suitable for use with the present invention is provided.

Test strip 100 is made up of a bottom layer 102 and a top layer 104 separated by a thin spacer layer 106 which has a cutaway section that defines a reaction zone or area 108. Generally, bottom and top layers 102 and 104 are configured in the form of elongated rectangular strips each having a length in the range from about 2 to 6 cm, usually from about 3 to 4 cm, having a width in the range from about 0.3 to 1.0 cm, usually from about 0.5 to 0.7 cm, and having a thickness in the range from about 0.2 to 1.2 mm, and usually from 0.38 to 0.64 mm.

Bottom layers 102 and 104 each define a substrate base, 110 and 112, respectively, made of an inert support or backing material on which has been deposited, typically by sputtering, a conductive material which form the reference and working electrodes, 114 and 116, respectively. The inert backing material is typically rigid material and capable of providing structural support to each of the electrodes 114 and 116 and, in turn, the electrochemical test strip as a whole. Such suitable materials include plastics (*e.g.*, PET, PETG, polyimide, polycarbonate, polystyrene, and polyester), silicon, ceramic, glass, and the like. The conductive material is preferably a metal, where metals of interest include palladium, gold, platinum, iridium, doped indium tin oxide, stainless steel, carbon and the like. For example, a palladium coating may form working electrode 116 while a gold coating forms reference electrode 114.

Spacer layer 106 is positioned or sandwiched between electrodes 114 and 116. The thickness of spacer layer 106 generally ranges from about 1 to 500 µm, and usually from about 50 to 150 µm. Spacer layer 106 may be fabricated from any convenient material, where representative suitable materials include PET, PETG, polyimide, polycarbonate and the like. The surfaces of spacer layer 106 may be treated so as to be adhesive with respective electrodes 114 and 116 and thereby maintain the structure of the electrochemical test strip 10.

Spacer layer 106 is cut so as to provide a reaction zone or area 108 having any appropriate shape including circular, square, triangular, rectangular, or irregular shaped reaction areas. The top and bottom of the reaction zone 108 is defined by the facing surfaces of electrodes 114, 116 while spacer layer 106 defines the sidewalls of the reaction area 108. The volume of the reaction area ranges from at least about 0.1 to 10 µl, usually from about 0.2 to 5.0 µL and more usually from about 0.05 to 1.6 µL.

Present in the reaction area 108, deposited near one end 118 of electrode 114, is a redox reagent system, generally referred to as a signal producing system, which provides for the specific reagent components that chemically interact with the target analyte to derive the concentration of analyte in the biological sample. The redox reagent system or signal producing system typically includes at least one enzyme component and a mediator component.

In many embodiments, the enzyme component of the redox reagent system includes one or more enzymes that work in concert to oxidize/reduce the analyte of interest. In other words, the enzyme component of the redox reagent system is made up of a single analyte oxidizing/reducing enzyme or a collection of two or more enzymes that work in concert to oxidize/reduce the analyte of interest. Typical enzymes of interest include oxidoreductases, hydrolases, transferases, dehydrogenases, esterases, and the like; however, the specific enzyme present in the reaction area depends on the particular analyte for which the electrochemical test strip is designed to detect. The second component of the redox reagent system is a mediator component, which is made up of one or more mediator agents. In those embodiments where glucose is the analyte of interest and glucose oxidase or glucose dehydrogenase is the enzyme component, a mediator of particular interest is ferricyanide. Other reagents that may be present in the reaction area include buffering agents, *e.g*., citraconate, citrate, phosphate, "Good" buffers and the like. The redox reagent system is generally present in dry form. The amounts of the various components may vary, where the amount of enzyme component typically ranges from about 0.1 to 20% by weight.

Although the foregoing invention has been described in some detail by way of illustration and example for purposes of clarity of understanding, it is readily apparent to those of ordinary skill in the art in light of the teachings of this invention that certain changes and modifications may be made thereto without departing from the spirit or scope of the appended claims.

## Claims

1. A layered structure comprising:
a substrate;
a conductive film covering a surface of said substrate and having a thickness; and
either
(a) a textured pattern of recesses within said layered structure wherein said recesses have a depth greater than the thickness of the conductive film;
or
(b) a textured pattern of microstructures within said layered structure wherein said microstructures have a height greater than the thickness of said conductive film;
or
(c) a textured pattern of peaks and valleys within said layered structure wherein the vertical distance between said peaks and said valleys is no less than about 5 times greater than said conductive film thickness.

2. The layered structure of claim 1 wherein said textured pattern is geometric.

3. The layered structure of claim 1 wherein said textured pattern is random.

4. The layered structure of claim 1 wherein said textured pattern comprises a frosting.

5. The layered structure of any one of claims 1 to 4, wherein the textured pattern is according to part (c) and the peak-to-peak distance ranges from 10,000Å to 1,000,000Å.

6. The layered structure of any one of claims 1 to 5, wherein the textured pattern is according to part (c) and the valley-to-peak distance is no less than about 100Å.

7. A device comprising:
a metallized surface having a thickness; and
a textured pattern of:
either
recesses wherein said recesses have a depth at least 5 times greater than said thickness;
or
microstructures wherein said microstructures have a height at least 5 times greater than said thickness.

8. The device of claim 7 wherein said device is an electrochemical test strip and said metallized surface is an electrode.

9. The device of claim 7 or claim 8 wherein said textured pattern is formed by one or more microreplication techniques.
